# EUROPÄISCHE PATENTSCHRIFT

(11) **EP 3 326 705 B1**
(45) Veröffentlichungstag und Bekanntmachung des Hinweises auf die Patenterteilung: **07.08.2019**
(21) Anmeldenummer: 17200527.4
(22) Anmeldetag: 08.11.2017
(51) Int. Cl.: B01D 33/11, B01D 33/46, B01D 33/76, B04B 7/18, B04B 11/08

(54) **FILTERZENTRIFUGE**
FILTER CENTRIFUGE
CENTRIFUGEUSE FILTRANTE

(30) Priorität: 21.11.2016 DE 102016122348
(43) Veröffentlichungstag der Anmeldung: 30.05.2018
(73) Patentinhaber: Andritz KMPT GmbH, 85256 Vierkirchen (DE)
(72) Erfinder: GRIM, Gunnar, 85258 Weichs (DE)
(74) Vertreter: Viering, Jentschura & Partner mbB Patent- und Rechtsanwälte

(56) Entgegenhaltungen:
- EP-A2- 0 431 427
- DE-A1- 19 946 330
- JP-A- 2004 188 322
- JP-A- 2005 021 852

## Beschreibung

Die vorliegende Erfindung betrifft eine Filterzentrifuge zum Ausfiltern eines Feststoffmaterials aus einer Suspension.

Filterzentrifugen werden zum Beispiel bei chemischen, pharmazeutischen und biologischen Anwendungen im industriellen Maßstab zur Filtration von Suspensionen (Fest-Flüssig-Gemischen) eingesetzt. Beispiele für Filterzentrifugen sind in der DE19946330, JP2004188322 und JP2005021852 offenbart.

Als eine Bauform einer herkömmlichen Filterzentrifuge ist zum Beispiel eine diskontinuierliche Schälzentrifuge bekannt. Diese weist eine in einem Gehäuse drehbar gelagerte Filtertrommel auf, welcher mittels einer Suspension-Zuführvorrichtung, welche in die Filtertrommel hineinragt, eine zu filtrierende Suspension zugeführt wird. Ferner ragt, zumindest in einem Austragebetrieb, in welchem das ausgefilterte Filtermaterial aus der Filtertrommel ausgetragen wird, eine Feststoffmaterial-Austragvorrichtung in die Filtertrommel hinein, mittels welcher das ausgefilterte Feststoffmaterial aus der Filtertrommel ausgetragen wird. Ferner weist die Schälzentrifuge an einer Innenwand der Filtertrommel ein Filtermittel auf, zum Beispiel ein Filtertuch, welches zum Ausfiltern des Feststoffmaterials aus der Suspension dient und welches, zum Beispiel mittels Spannmitteln, in der Filtertrommel gehalten ist.

In einem normalen/regulären Filterbetrieb wird der sich drehenden Filtertrommel die zu filtrierende Suspension über die Suspension-Zuführvorrichtung zugeführt. Aufgrund der Drehung der Filtertrommel wird die Suspension radial nach außen zur Innenwand der Filtertrommel und somit zum Filtermittel gedrückt. Die Flüssigkeit der Suspension durchdringt das Filtermittel sowie das daran ausgefilterte Feststoffmaterial und wird aus der Filtertrommel abgeführt bzw. herausgeschleudert (zum Beispiel mittels in der Filtertrommel vorgesehenen Drainagebohrungen oder -löchern). Das ausgefilterte Feststoffmaterial verbleibt als Filterkuchen an dem Filtermittel und wird schließlich, zum Beispiel wenn ein geforderter Trennungsgrad von Flüssigkeit und Feststoffmaterial durch Ausschleudern der Flüssigkeit erreicht ist, im Austragebetrieb durch die Feststoffmaterial-Austragvorrichtung, zum Beispiel mittels eines Schälmessers, welches den Filterkuchen abschält, aus der Filtertrommel ausgetragen.

Durch die Erfindung wird eine Filterzentrifuge zum Ausfiltern eines Feststoffmaterials aus einer Suspension geschaffen, die im Hinblick auf ein Austragen des ausgefilterten Feststoffmaterials aus der Filtertrommel verbessert ist.

Hierzu stellt die vorliegende Erfindung eine Filterzentrifuge zum Ausfiltern eines Feststoffmaterials aus einer Suspension gemäß Anspruch 1 bereit. Weitere Ausgestaltungen der erfindungsgemäßen Filterzentrifuge sind in den abhängigen Ansprüchen beschrieben.

Gemäß verschiedenen Aspekten der vorliegenden Erfindung hat eine Filterzentrifuge zum Ausfiltern eines Feststoffmaterials aus einer Suspension, die von dem Feststoffmaterial und einer Flüssigkeit gebildet ist, eine Filtertrommel, welche eine Filtertrommelinnenfläche und eine Filtertrommellängsachse definiert und welche um die Filtertrommellängsachse, zum Beispiel mittels eines Drehantriebs, zum Beispiel in eine Filtertrommelbetriebsdrehrichtung, drehbar ist. Die Filtertrommellängsachse kann zum Beispiel beliebig ausgerichtet/angeordnet sein. Die Filtertrommellängsachse kann zum Beispiel zumindest im Wesentlichen horizontal ausgerichtet/angeordnet sein. Die Filtertrommellängsachse kann zum Beispiel zumindest im Wesentlichen vertikal ausgerichtet/angeordnet sein.

Die Filterzentrifuge hat ferner eine Feststoffmaterial-Austragevorrichtung zum Austragen des ausgefilterten Feststoffmaterials aus der Filtertrommel im Rahmen eines Austragebetriebs der Filterzentrifuge. Die Feststoffmaterial-Austragevorrichtung weist einen Austragevorrichtungs-Arm mit einem freien Armende und eine Feststoffmaterial-Austrageleitung auf, welche an dem Arm ausgebildet ist (z.B. indem sie separat vorgesehen und an dem Arm angebracht ist, oder z.B. indem sie von dem Arm selbst ausgebildet bzw. in diesem integriert ausgebildet ist) und über welche das ausgefilterte Feststoffmaterial (im Austragebetrieb) aus der Filtertrommel herausführbar ist (bzw. herausgeführt wird) und welche eine Feststoffmaterial-Einlassöffnung hat, welche benachbart zu dem freien Armende angeordnet ist und über welche das ausgefilterte Feststoffmaterial (im Austragebetrieb) von der Filtertrommel in die Feststoffmaterial-Austrageleitung gelangen kann. Die Feststoffmaterial-Austrageleitung kann zum Beispiel ein Rohr oder ein Schlauch sein.

Der Austragevorrichtungs-Arm ist, zum Beispiel mittels eines an eine Steuervorrichtung angeschlossenen Antriebs, gesteuert bewegbar eingerichtet, sodass im Austragebetrieb die Feststoffmaterial-Einlassöffnung mittels einer Bewegung des Austragevorrichtungs-Arms (z.B. radial) in die Nähe der Filtertrommelinnenfläche bewegbar ist (bzw. bewegt wird), um (im Austragebetrieb) das an der Filtertrommelinnenfläche anhaftende, ausgefilterte Feststoffmaterial aufnehmen zu können.

Die Feststoffmaterial-Austragevorrichtung weist ferner zumindest eine (z.B. gekrümmte) Kufe auf, welche eine (zum Beispiel gekrümmte) Kufen-Längsachse (z.B. einen Kufen-Längsverlauf, z.B. eine Kufen-Längsrichtung) definiert, die sich quer zur Filtertrommellängsachse erstreckt, und welche benachbart zu der Feststoffmaterial-Einlassöffnung angeordnet ist, sodass sich die Kufe mit einem sich (entsprechend) quer zur Filtertrommellängsachse erstreckenden Kufen-Auflageabschnitt (der Teil der Kufe ist) im Austragebetrieb gegen die Filtertrommelinnenfläche abstützen kann, um dadurch den Austragevorrichtungs-Arm im Austragebetrieb gegen die Filtertrommelinnenfläche abzustützen.

Die Merkmale, dass sich die Kufen-Längsachse (z.B. die Kufen-Längsrichtung, z.B. der Kufen-Längsverlauf) quer zur Filtertrommellängsachse erstreckt und dass sich der Kufen-Auflageabschnitt quer zur Filtertrommellängsachse erstreckt, umfassen z.B. eine Erstreckung der Kufen-Längsachse (z.B. der Kufen-Längsrichtung, z.B. des Kufen-Längsverlaufs) und des Kufen-Auflageabschnitts zur Filtertrommellängsachse von jeweils zumindest im Wesentlichen 90° (d.h., in diesem Falle erstrecken sich die Kufen-Längsachse und der Kufen-Auflageabschnitt jeweils zumindest im Wesentlichen orthogonal zur Filtertrommellängsachse) und umfassen z.B. auch eine schräge Erstreckung der Kufen-Längsachse (z.B. der Kufen-Längsrichtung, z.B. des Kufen-Längsverlaufs) und des Kufen-Auflageabschnitts zur Filtertrommellängsachse von z.B. größer gleich 30°, größer gleich 45° oder größer gleich 60° zur Filtertrommellängsachse. Die (zum Beispiel gekrümmte) Kufen-Längsachse (z.B. die Kufen-Längsrichtung, z.B. der Kufen-Längsverlauf) und der Kufen-Auflageabschnitt können sich jeweils zum Beispiel in einem Winkel von größer/gleich 45° oder größer/gleich 60° oder größer/gleich 75° zur Filtertrommellängsachse erstrecken. Der Kufen-Auflageabschnitt kann sich im Austragebetrieb zum Beispiel direkt gegen die Filtertrommelinnenfläche abstützen, d.h. z.B. direkt an dieser anliegen, wobei die Filtertrommelinnenfläche z.B. von einem Filtermedium (z.B. einem Filtertuch) gebildet wird/ist. Es ist auch möglich, dass sich der Kufen-Auflageabschnitt im Austragebetrieb z.B. indirekt über das zwischen der Filtertrommelinnenfläche und dem Kufen-Auflageabschnitt vorliegende, ausgefilterte Feststoffmaterialgegen die Filtertrommelinnenfläche abstützt und/oder anliegt.. Der Kufen-Auflageabschnitt und/oder die zumindest eine Kufe kann zum Beispiel im Austragebetrieb in das ausgefilterte Feststoffmaterial eingreifen. Das Eingreifen in das ausgefilterte Feststoffmaterial kann z.B. ein Ablösen und/oder ein Umformen des ausgefilterten Feststoffmaterials an der Filtertrommelinnenfläche bewirken, was beides letztlich ein Abtragen und/oder eine Absaugen des ausgefilterten Feststoffmaterials von der Filtertrommelinnenfläche in die Feststoffmaterial-Austrageleitung erleichtert/unterstützt.

Die zumindest eine Kufe kann zum Beispiel an dem freien Armende befestigt sein, zum Beispiel mit einem (in Richtung der Kufen-Längsachse gesehen) ersten Ende der Kufe und/oder mit einem (in Richtung der Kufen-Längsachse gesehen) dem ersten Ende der Kufe gegenüberliegenden zweiten Ende der Kufe. Die zumindest eine Kufe kann sich zum Beispiel über die gesamte Feststoffmaterial-Einlassöffnung und/oder entlang der gesamten Feststoffmaterial-Einlassöffnung erstrecken. Die Feststoffmaterial-Austragevorrichtung kann zum Beispiel eine Mehrzahl von Kufen aufweisen, die zum Beispiel wie die oben beschriebene (zumindest eine) Kufe ausgebildet sein können und die in Richtung der Filtertrommellängsachse im Abstand voneinander angeordnet sind.

Wie oben erläutert kann durch die zumindest eine Kufe zum Beispiel das ausgefilterte Feststoffmaterial im Austragebetrieb umgeformt und zumindest im Wesentlichen vollständig von der Filtertrommelinnenfläche (bzw. von einem/dem daran anliegenden/angeordneten Filtermedium) abgelöst werden. Dadurch kann das ausgefilterte Feststoffmaterial zumindest im Wesentlichen vollständig aus der Filtertrommel ausgetragen werden und ein Austragen des ausgefilterten Feststoffmaterials aus der Filtertrommel kann verbessert sein. Ferner kann durch die zumindest eine Kufe eine Berührung bzw. ein Kontakt zwischen scharfkantigen Teilen des Austragevorrichtungs-Arms und einem/dem an der Filtertrommelinnenfläche anliegenden/angeordneten Filtermedium verhindert werden, wodurch eine/die Lebensdauer des Filtermediums verbessert sein kann.

Optional kann die zumindest eine Kufe von (zumindest) einem langgestreckten Drahtbügel gebildet sein. Der Drahtbügel kann zum Beispiel aus einem Draht, zum Beispiel einem Runddraht, mit einem Durchmesser von größer gleich 0,5 mm oder größer gleich 1 mm oder größer gleich 1,5 mm gemacht sein. Der Drahtbügel kann zum Beispiel aus einem Draht mit einem Durchmesser von kleiner gleich 3 mm oder kleiner gleich 2,5 mm oder kleiner gleich 2 mm gemacht sein. Die (zumindest eine) Kufe bzw. der Drahtbügel kann zum Beispiel elastisch oder starr sein. Der Drahtbügel kann zum Beispiel aus einem Metalldraht oder einem Kunststoffdraht gemacht sein. Die (zumindest eine) Kufe bzw. der Drahtbügel kann zum Beispiel aus einem gleitfähigen Kunststoff gemacht sein und/oder mit diesem beschichtet sein, welcher zum Beispiel ausgewählt sein kann aus der Gruppe, bestehend aus PE (Polyethylen), PTFE (Polytetrafluorethylen), PA (Polyamid), PI (Polyimid), POM (Polyoxymethylen), PVDF (Polyvinylidenfluorid) und Gemischen davon.

Optional kann die zumindest eine Kufe unter Ausbildung eines Kröpfungsabschnitts gekröpft sein und der Kufen-Auflageabschnitt kann von dem Kröpfungsabschnitt gebildet sein. Der Kröpfungsabschnitt ist im Austragebetrieb z.B. zu der Filtertrommelinnenfläche hin (weisend) konvex (aus)geformt.

Die Feststoffmaterial-Austragevorrichtung kann ferner optional eine Klinge aufweisen, welche eine (z.B. gekrümmte) Schneide definiert, die sich z.B. zumindest im Wesentlichen entlang einer (z.B. entsprechend gekrümmten) Schneiden-Längsachse erstreckt, und welche benachbart zur Feststoffmaterial-Einlassöffnung angeordnet ist, wobei z.B. die Schneiden-Längsachse im Austragebetrieb zumindest im Wesentlichen parallel zur Filtertrommellängsachse angeordnet ist (z.B. verläuft), wobei die Schneide im Austragebetrieb bezüglich der Filtertrommellängsachse radial nach innen in einem Schneiden-Radialabstand von dem Kufen-Auflageabschnitt angeordnet ist, wobei optional der Schneiden-Radialabstand im Bereich von 1 mm bis 10 mm liegt. Im Austragebetrieb kann die Klinge (bzw. deren Schneide) zum Beispiel in das ausgefilterte (an der Filtertrommelinnenfläche anhaftende) Feststoffmaterial eingreifen, sodass das ausgefilterte Feststoffmaterial abgetragen/abgeschält und/oder umgeformt wird. Der (minimale) Schneiden-Radialabstand kann zum Beispiel größer gleich 1 mm oder größer gleich 3 mm oder größer gleich 5 mm sein. Der (maximale) Schneiden-Radialabstand kann zum Beispiel kleiner gleich 10 mm oder kleiner gleich 8 mm oder kleiner gleich 6 mm sein. Die zumindest eine Kufe kann zum Beispiel an der Klinge befestigt sein, zum Beispiel mit einem (in Richtung der Kufen-Längsachse gesehen) ersten Ende der Kufe, wobei optional ein (in Richtung der Kufen-Längsachse gesehen) dem ersten Ende der Kufe gegenüberliegendes zweites Ende der Kufe an dem freien Armende befestigt sein kann.

Die (jeweilige) Kufe kann an einem ersten Kufen(längs)ende befestigt sind, und das zweite Kufen(längs)ende der (jeweiligen) Kufe kann ein freies Ende sein.

Die Filterzentrifuge kann ferner optional aufweisen eine Druckdifferenz-Erzeugungsvorrichtung zum Erzeugen einer Druckdifferenz zwischen der Feststoffmaterial-Einlassöffnung und einem Inneren der Feststoffmaterial-Austrageleitung, derart dass der Druck in der Feststoffmaterial-Austrageleitung kleiner ist als an der Feststoffmaterial-Einlassöffnung bzw. als in einer/der äußeren Umgebung der Feststoffmaterial-Einlassöffnung. Die Druckdifferenz kann zum Beispiel erzeugt werden durch mit Druck Beaufschlagen der/einer die Feststoffmaterial-Einlassöffnung umgebenden äußeren Umgebung und/oder durch mit Vakuum Beaufschlagen des Inneren der Feststoffmaterial-Austrageleitung. Die Druckdifferenz-Erzeugungsvorrichtung kann zum Beispiel einen Kompressor und/oder eine Vakuumpumpe aufweisen. Das Austragen des ausgefilterten Feststoffmaterials aus der Filtertrommel kann zum Beispiel durch die Druckdifferenz bewirkt sein. Durch die Druckdifferenz kann das ausgefilterte Feststoffmaterial zum Beispiel aus der Filtertrommel ausgesaugt werden. Durch die Druckdifferenz kann das ausgefilterte Feststoffmaterial zum Beispiel in die Feststoffmaterial-Austrageleitung eingesaugt werden.

Durch die Druckdifferenz zwischen (der äußeren Umgebung) der Feststoffmaterial-Einlassöffnung und dem Inneren der Feststoffmaterial-Austrageleitung kann zum Beispiel ein Fluidstrom (zum Beispiel ein Gasstrom) an/in der Feststoffmaterial-Einlassöffnung und/oder an/in einem Bereich, der benachbart zu der Feststoffmaterial-Einlassöffnung ist, erzeugt werden. Dadurch kann das von der Kufe im Austragebetrieb umgeformte bzw. abgelöste Feststoffmaterial fluidisiert und zumindest im Wesentlichen vollständig in die Feststoffmaterial-Austrageleitung eingesaugt werden, wodurch ein Austragen des ausgefilterten Feststoffmaterials aus der Filtertrommel verbessert sein kann.

Die Feststoffmaterial-Einlassöffnung und optional die Klinge (und optional die Schneide) kann/können sich optional in Richtung der Filtertrommellängsachse zumindest im Wesentlichen über die gesamte Länge der Filtertrommelinnenfläche erstrecken.

Die Feststoffmaterial-Einlassöffnung und optional die Klinge (und optional die Schneide) kann/können sich optional in Richtung der Filtertrommellängsachse über gleich oder weniger als ein Viertel, zum Beispiel gleich oder weniger als ein Achtel, zum Beispiel gleich oder weniger als ein Sechzehntel, der gesamten Länge der Filtertrommelinnenfläche erstrecken. Der Austragevorrichtungs-Arm kann ferner optional, zum Beispiel mittels eines/des an eine/die Steuervorrichtung angeschlossenen Antriebs, gesteuert (in Richtung der Filtertrommellängsachse) translatorisch bewegbar eingerichtet sein, sodass im Austragebetrieb die Feststoffmaterial-Einlassöffnung und optional die Klinge mittels einer translatorischen Bewegung des Austragevorrichtungs-Arms in Richtung parallel zur Filtertrommellängsachse bewegbar ist/sind, um die Feststoffmaterial-Einlassöffnung und optional die Klinge (gemeinsam) parallel zur Filtertrommellängsachse zu verschieben.

Der Austragevorrichtungs-Arm kann optional ein Hohlkörper mit einem inneren Hohlraum sein und die Feststoffmaterial-Austrageleitung kann von dem Hohlraum des Hohlkörpers gebildet sein. Der Hohlkörper kann zum Beispiel ein stangenförmiges hohles Rohr sein, von dessen hohlem Inneren die Feststoffmaterial-Austrageleitung gebildet ist/wird.

Der Austragevorrichtungs-Arm kann optional um eine im Abstand zum freien Armende angeordnete Schwenkachse schwenkbar sein, welche zumindest im Wesentlichen parallel zur Filtertrommellängsachse und versetzt dazu ist. Der Austragevorrichtungs-Arm kann optional, zum Beispiel mittels eines/des an die Steuervorrichtung angeschlossenen Antriebs, um die Schwenkachse geschwenkt werden, um die Feststoffmaterial-Einlassöffnung, zum Beispiel im Austragebetrieb, in die Nähe der Filtertrommelinnenfläche zu bewegen.

Die Filtertrommellängsachse kann optional zumindest im Wesentlichen horizontal angeordnet sein, wobei im Austragebetrieb die in die Nähe der Filtertrommelinnenfläche bewegte Feststoffmaterial-Einlassöffnung bezüglich der Filtertrommellängsachse im unteren Drittel, zum Beispiel im unteren Viertel, zum Beispiel im unteren Achtel, der Filtertrommel angeordnet sein kann.

Der Kufen-Auflageabschnitt kann im Austragebetrieb optional zwischen der Feststoffmaterial-Einlassöffnung und der Filtertrommelinnenfläche angeordnet sein.

Die zumindest eine Kufe kann optional eine erste Kufe sein und die Feststoffmaterial-Austragevorrichtung kann optional noch eine zweite Kufe aufweisen, die wie die erste Kufe ausgebildet ist und die in Richtung der Filtertrommellängsachse im Abstand von der ersten Kufe angeordnet ist, wobei die Feststoffmaterial-Einlassöffnung sich zumindest im Wesentlichen zwischen der ersten Kufe und der zweiten Kufe befindet.

Beispielgebende, aber nicht einschränkende Ausführungsformen der vorliegenden Erfindung sind in den Figuren dargestellt und werden im Folgenden näher erläutert.

Es zeigen:
Figur 1 eine vereinfachte, schematische Ansicht einer Filtertrommel und einer Feststoffmaterial-Austragevorrichtung einer Filterzentrifuge gemäß einer ersten Ausführungsform der vorliegenden Erfindung,
Figur 2 eine vereinfachte, schematische, geschnittene Ansicht eines Abschnitts einer Filtertrommel und einer Feststoffmaterial-Austragevorrichtung einer Filterzentrifuge gemäß der ersten Ausführungsform der vorliegenden Erfindung,
Figur 3 eine vereinfachte, schematische Ansicht eines Abschnitts einer Feststoffmaterial-Austragevorrichtung einer Filterzentrifuge gemäß der ersten Ausführungsform der vorliegenden Erfindung,
Figur 4 eine vereinfachte, schematische, geschnittene Ansicht eines Abschnitts einer Filtertrommel und einer Feststoffmaterial-Austragevorrichtung einer Filterzentrifuge gemäß einer zweiten Ausführungsform der vorliegenden Erfindung,
Figur 5 eine vereinfachte, schematische, teilweise geschnittene Ansicht einer Filtertrommel und einer Feststoffmaterial-Austragevorrichtung einer Filterzentrifuge gemäß der zweiten Ausführungsform der vorliegenden Erfindung,
Figur 6 eine vereinfachte, schematische, teilweise geschnittene Ansicht einer Filtertrommel und einer Feststoffmaterial-Austragevorrichtung einer Filterzentrifuge gemäß einer dritten Ausführungsform der vorliegenden Erfindung, und
Figur 7 eine vereinfachte, schematische, teilweise geschnittene Ansicht einer Filterzentrifuge gemäß der ersten Ausführungsform der vorliegenden Erfindung.

In den Figuren sind identische oder ähnliche Elemente mit identischen Bezugszeichen versehen, soweit dies zweckmäßig ist.

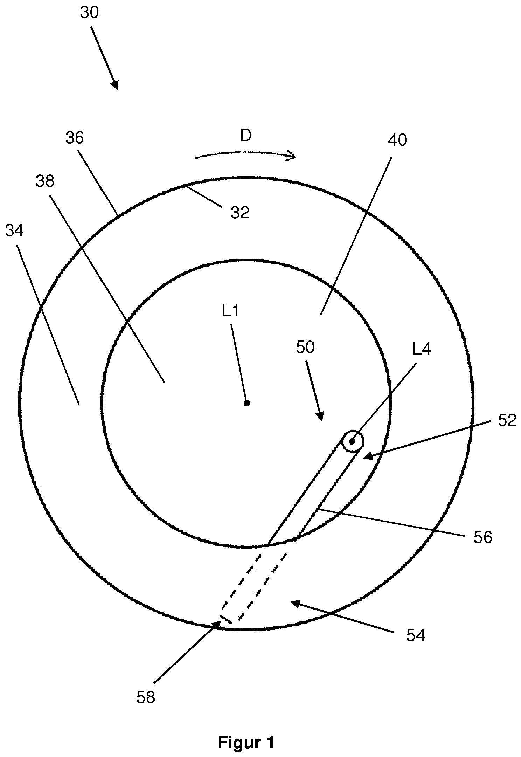

Wie in den Figuren 1-7 gezeigt weisen Filterzentrifugen 10 zum Ausfiltern eines Feststoffmaterials F aus einer Suspension, die von dem Feststoffmaterial F und einer Flüssigkeit gebildet ist, gemäß den verschiedenen Ausführungsformen der Erfindung auf eine Filtertrommel 30, welche eine Filtertrommelinnenfläche 32 und eine Filtertrommellängsachse L1 definiert und welche um die Filtertrommellängsachse L1, zum Beispiel mittels eines Drehantriebs 70, zum Beispiel in eine Filtertrommelbetriebsdrehrichtung D, drehbar ist, und eine Feststoffmaterial-Austragevorrichtung 50 zum Austragen des ausgefilterten Feststoffmaterials F aus der Filtertrommel 30 im Rahmen eines Austragebetriebs der Filterzentrifuge 10, wobei die Feststoffmaterial-Austragevorrichtung 50 aufweist einen Austragevorrichtungs-Arm 52 mit einem freien Armende 54 und eine Feststoffmaterial-Austrageleitung 56, welche an dem Arm 52 angebracht ist und über welche das ausgefilterte Feststoffmaterial F aus der Filtertrommel 30 herausführbar ist (bzw. herausgeführt wird) und welche eine Feststoffmaterial-Einlassöffnung 58 hat, welche benachbart zu dem freien Armende 54 angeordnet ist und über welche das ausgefilterte Feststoffmaterial F von der Filtertrommel 30 in die Feststoffmaterial-Austrageleitung 56 gelangen kann, wobei der Austragevorrichtungs-Arm 52 gesteuert bewegbar (zum Beispiel schwenkbar) eingerichtet ist, sodass im Austragebetrieb die Feststoffmaterial-Einlassöffnung 58 mittels einer Bewegung (zum Beispiel Schwenkbewegung) des Austragevorrichtungs-Arms 52 radial in die Nähe der Filtertrommelinnenfläche 32 bewegbar ist (bzw. bewegt wird), um das an der Filtertrommelinnenfläche 32 anhaftende, ausgefilterte Feststoffmaterial F aufnehmen zu können, und wobei die Feststoffmaterial-Austragevorrichtung 50 ferner zumindest eine Kufe 60 aufweist, welche eine Kufen-Längsachse L2 definiert, die sich quer (zum Beispiel zumindest im Wesentlichen orthogonal) zur Filtertrommellängsachse L1 erstreckt, und welche benachbart zu der Feststoffmaterial-Einlassöffnung 58 angeordnet ist, sodass die Kufe 60 mit einem sich (entsprechend) quer zur Filtertrommellängsachse L1 erstreckenden Kufen-Auflageabschnitt 62 im Austragebetrieb an der Filtertrommelinnenfläche 32 anliegen und/oder sich gegen diese abstützen kann, um den Austragevorrichtungs-Arm 52 im Austragebetrieb gegen die Filtertrommelinnenfläche 32 abzustützen. Die (zum Beispiel gekrümmte) Kufen-Längsachse L2 kann sich zum Beispiel zumindest im Wesentlichen orthogonal oder in einem Winkel von z.B. größer gleich 30° zur Filtertrommellängsachse L1 erstrecken.

Die Filtertrommellängsachse L1 kann beliebig angeordnet sein/werden, zum Beispiel zumindest im Wesentlichen horizontal (Horizontal-Filterzentrifuge) oder zumindest im Wesentlichen vertikal (Vertikal-Filterzentrifuge). Figur 1 zeigt hier zum Beispiel eine Seitenansicht einer Filtertrommel 30 und einer Feststoffmaterial-Austragevorrichtung 50 einer Horizontal-Filterzentrifuge. Alternativ könnte Figur 1 eine Draufsicht einer Filtertrommel 30 und einer Feststoffmaterial-Austragevorrichtung 50 einer Vertikal-Filterzentrifuge zeigen. Wenn die Filtertrommellängsachse L1 zumindest im Wesentlichen horizontal angeordnet ist, kann im Austragebetrieb die in die Nähe der Filtertrommelinnenfläche 32 bewegte Feststoffmaterial-Einlassöffnung 58 bezüglich der Filtertrommellängsachse L1 im unteren Drittel der Filtertrommel 30 angeordnet sein (siehe Figuren 1, 2 und 4).

Die zumindest eine Kufe 60 kann von einem langgestreckten Drahtbügel gebildet sein. Ferner kann die zumindest eine Kufe 60 unter Ausbildung eines Kröpfungsabschnitts 68 gekröpft sein und der Kufen-Auflageabschnitt 62 kann von dem Kröpfungsabschnitt 68 gebildet sein. Die zumindest eine Kufe 60 bzw. der langgestreckte Drahtbügel kann, zum Beispiel mit einem ersten Ende davon und/oder mit einem dem ersten Ende gegenüberliegenden zweiten Ende davon, an dem freien Armende 54 befestigt sein. Die zumindest eine Kufe 60 bzw. der langgestreckte Drahtbügel kann sich über die gesamte Feststoffmaterial-Einlassöffnung 58 und/oder entlang der gesamten Feststoffmaterial-Einlassöffnung 58 erstrecken.

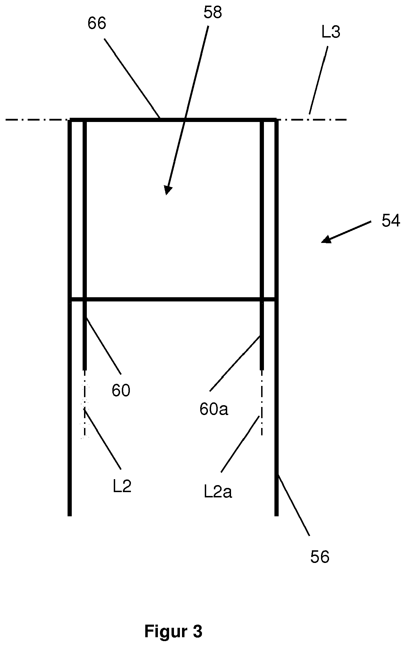

Die zumindest eine Kufe 60 kann eine erste Kufe 60 sein und die Feststoffmaterial-Austragevorrichtung 50 kann noch eine zweite Kufe 60a aufweisen, die wie die erste Kufe 60 ausgebildet ist und die in Richtung der Filtertrommellängsachse L1 im Abstand von der ersten Kufe 60 angeordnet ist, wobei die Feststoffmaterial-Einlassöffnung 58 sich zumindest im Wesentlichen zwischen der ersten Kufe 60 und der zweiten Kufe 60a befindet (siehe Figur 3). Der Austragevorrichtungs-Arm 52 kann zum Beispiel aus Metall sein, und die jeweilige Kufe 60 bzw. 60a kann zum Beispiel an dem Arm 52 mittels Schweißens befestigt sein. Lösbare Befestigungen, zum Beispiel via Schrauben, oder andere nichtlösbare Befestigungen, zum Beispiel via Nieten, sind aber auch möglich.

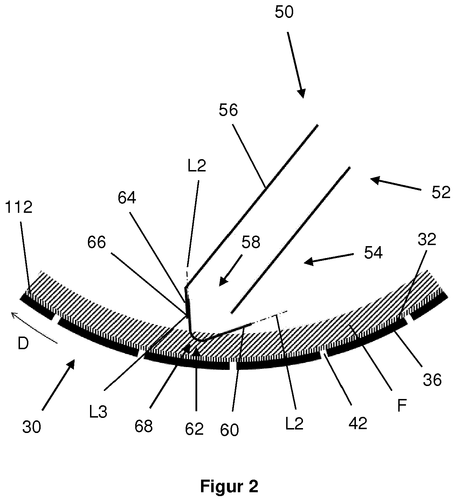

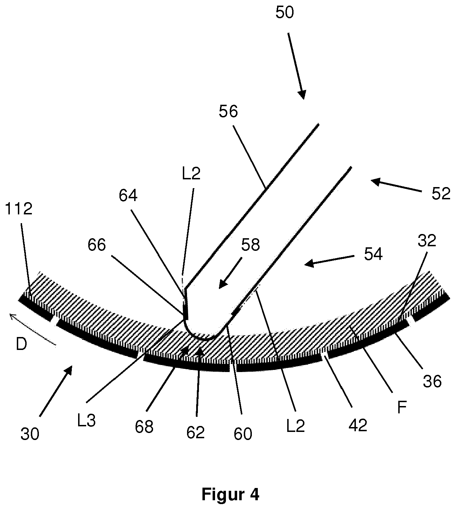

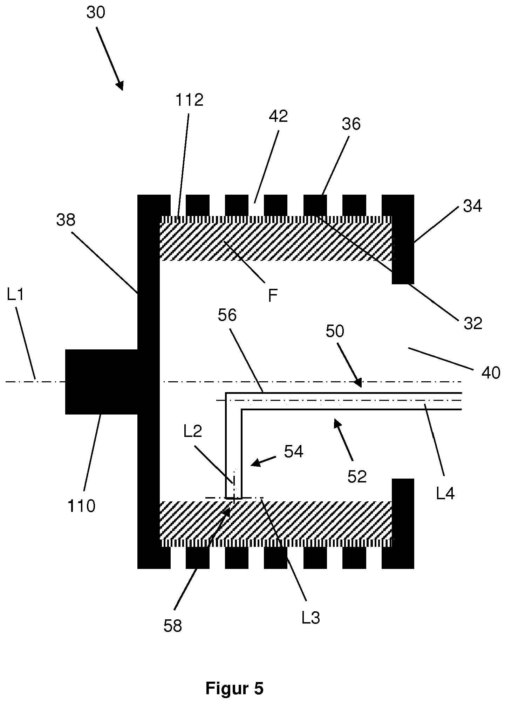

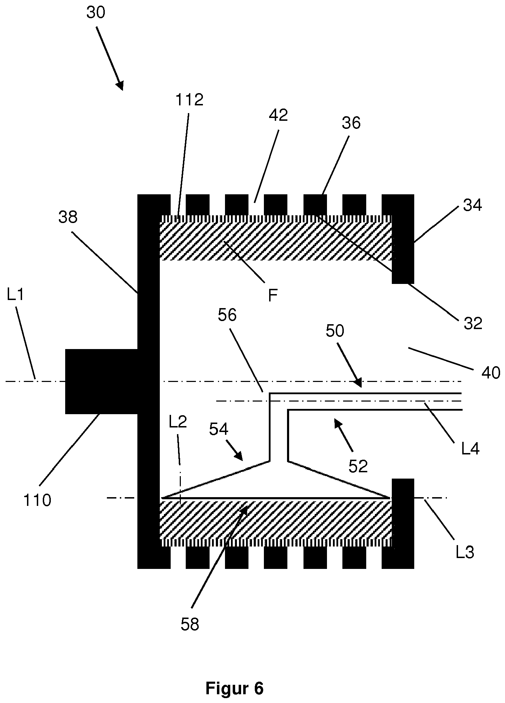

Die Feststoffmaterial-Austragevorrichtung 50 kann ferner eine Klinge 64 aufweisen, welche eine Schneide 66 definiert, die sich entlang einer Schneiden-Längsachse L3 erstreckt, und welche benachbart zur Feststoffmaterial-Einlassöffnung 58 angeordnet ist (siehe Figuren 2 und 4). Die Schneiden-Längsachse L3 kann im Austragebetrieb zumindest im Wesentlichen parallel zur Filtertrommellängsachse L1 verlaufen (siehe Figuren 5 und 6). Die Schneide 66 kann im Austragebetrieb bezüglich der Filtertrommellängsachse L1 radial nach innen in einem Schneiden-Radialabstand von dem Kufen-Auflageabschnitt 62 angeordnet sein (siehe Figuren 2 und 4), wobei optional der Schneiden-Radialabstand im Bereich von 1 mm bis 10 mm liegt. Die zumindest eine Kufe 60 bzw. der langgestreckte Drahtbügel kann, zum Beispiel mit einem ersten Ende davon, an der Klinge 64 befestigt sein, wobei optional ein dem ersten Ende gegenüberliegendes zweites Ende davon an dem freien Armende 54 befestigt sein kann. Die Schneide 66 kann auch gekrümmt sein.

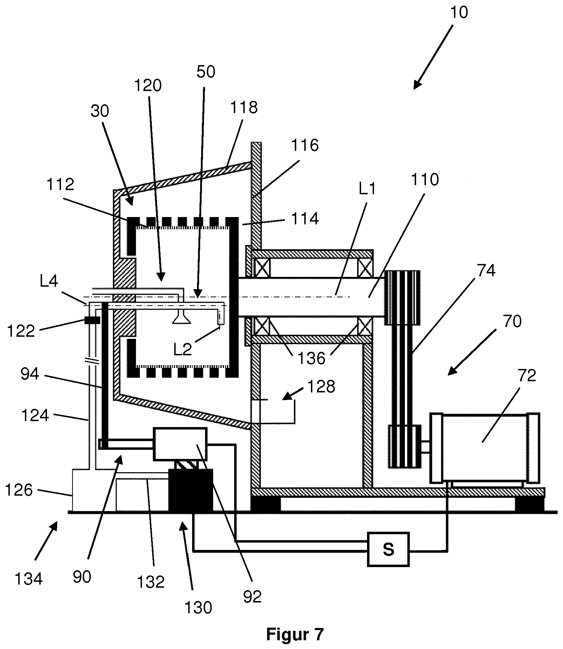

Die Feststoffmaterial-Einlassöffnung 58 und optional die Klinge 64 und die Schneide 66 kann/können sich in Richtung der Filtertrommellängsachse L1 über zum Beispiel maximal etwa 5-10% der gesamten Länge der Filtertrommelinnenfläche 32 erstrecken (siehe Figur 5 und 7), wobei der Austragevorrichtungs-Arm 52 ferner, zum Beispiel mittels eines/des unten erläuterten Antriebs 90, gesteuert translatorisch (entlang der Filtertrommellängsachse L1) bewegbar eingerichtet ist, sodass im Austragebetrieb die Feststoffmaterial-Einlassöffnung 58 (und optional die Klinge 64) mittels einer translatorischen Bewegung des Austragevorrichtungs-Arms 52 in Richtung parallel zur Filtertrommellängsachse L1 bewegbar ist (bzw. bewegt wird) (optional bewegt werden), um die Feststoffmaterial-Einlassöffnung 58 (und optional die Klinge 64 gemeinsam) parallel zur Filtertrommellängsachse L1 zu verschieben.

Alternativ dazu kann sich die Feststoffmaterial-Einlassöffnung 58 und optional die Klinge 64 und die Schneide 66 in Richtung der Filtertrommellängsachse L1 zumindest im Wesentlichen über die gesamte Länge der Filtertrommelinnenfläche 32 erstrecken (siehe Figur 6). Dadurch kann auf die (oben erläuterte) translatorische Bewegung des Austragevorrichtungs-Arms 52 verzichtet werden.

Die Filterzentrifugen 10 gemäß den verschiedenen Ausführungsformen der Erfindung können ferner aufweisen eine Druckdifferenz-Erzeugungsvorrichtung 130 zum Erzeugen einer Druckdifferenz zwischen der Feststoffmaterial-Einlassöffnung 58 und einem Inneren der Feststoffmaterial-Austrageleitung 56, derart dass der Druck in der Feststoffmaterial-Austrageleitung 56 kleiner ist als in der äußeren Umgebung der Feststoffmaterial-Einlassöffnung 58. In der in Figur 7 gezeigten Ausführungsform weist die Druckdifferenz-Erzeugungsvorrichtung 130 eine Vakuumpumpe auf. Die dort gezeigte (Horizontal-)Filterzentrifuge 10 weist ferner eine Feststoffmaterial-Sammelvorrichtung 134 auf, über welche die Druckdifferenz-Erzeugungsvorrichtung 130 mit der Feststoffmaterial-Austragevorrichtung 50 verbunden ist. Die Feststoffmaterial Sammelvorrichtung 134 hat hier eine Feststoffmaterial-Leitung 124, ein Verbindungsstück 122, einen Feststoffmaterial-Sammelbehälter 126 und eine Verbindungsleitung 132. Das Verbindungsstück 122 ist mit einem Ende der Feststoffmaterial-Leitung 124 verbunden und kann an die Feststoffmaterial-Austragevorrichtung 50 angeschlossen sein. Ein anderes Ende der Feststoffmaterial-Leitung 124 ist an den Feststoffmaterial-Sammelbehälter 126 angeschlossen. Ein Ende der Verbindungsleitung 132 ist an den Feststoffmaterial-Sammelbehälter 126 angeschlossen und ein anderes Ende der Verbindungsleitung 132 ist an die Druckdifferenz-Erzeugungsvorrichtung 130 angeschlossen. Dadurch kann die Feststoffmaterial-Austrageleitung 56 mit dem von der Vakuumpumpe der Druckdifferenz-Erzeugungsvorrichtung 130 erzeugten Vakuum beaufschlagt werden.

Die Filtertrommeln 30 der Filterzentrifugen gemäß den verschiedenen Ausführungsformen der Erfindung weisen zum Beispiel auf einen Trommelmantel 36, welcher eine hohlzylindrische Form hat, einen Trommelboden 38, welcher an einem axialen Ende des Trommelmantels 36 (zum Beispiel in Figuren 5 und 6 an einem linken Ende des Trommelmantels 36) mit diesem verbunden ist und dieses Ende des Trommelmantels 36 verschließt, und einen Trommelkragen 34, welcher an dem anderen (bzw. gegenüberliegenden) axialen Ende des Trommelmantels 36 (zum Beispiel in Figuren 5 und 6 an einem rechten Ende des Trommelmantels 36) mit diesem verbunden ist und welcher eine zentrale Öffnung 40 aufweist. Der Trommelmantel 36 hat mehrere radiale Drainagebohrungen bzw. -löcher 42, durch die die Flüssigkeit der Suspension in einem regulären Filterbetrieb aus der Filtertrommel 30 abgeführt bzw. herausgeschleudert wird. Die Filtertrommelinnenfläche 32 ist zum Beispiel von einer der Filtertrommellängsachse L1 zugewandten (Innen-)Fläche des (hohlzylindrischen) Trommelmantels 36 gebildet. Die Filterzentrifugen 10 können ferner eine Antriebswelle 110 aufweisen, welche an einer zentralen Position des Trommelbodens 38 mit diesem verbunden ist, sodass eine von der Antriebswelle 110 definierte Wellenachse zumindest im Wesentlichen deckungsgleich mit der Filtertrommellängsachse L1 ist. Die Filterzentrifugen 10 können ferner ein Filtermedium 112 (zum Beispiel ein Filtertuch, welches aus einem Gewebematerial hergestellt ist) aufweisen, welches in die Filtertrommel 30 an die Filtertrommelinnenfläche 32 anliegend eingesetzt ist, sodass die Drainagebohrungen bzw. -löcher 42 vollständig von dem Filtermedium 112 abgedeckt sind. Das Filtermedium 112 ist dazu eingerichtet, das Feststoffmaterial F aus der zu filtrierenden Suspension zurückzuhalten bzw. auszufiltern und die Flüssigkeit der zu filtrierenden Suspension durchzulassen.

Die Filterzentrifugen 10 gemäß den diversen Ausführungsformen können ferner aufweisen einen Drehantrieb 70, welcher mit der Antriebswelle 110 verbunden ist, und eine Steuervorrichtung S, welche mit dem Drehantrieb 70 verbunden ist. Die Steuervorrichtung S kann eingerichtet sein, um den Drehantrieb 70 im Austragebetrieb so zu steuern, dass eine Drehgeschwindigkeit der Filtertrommel 30 im Vergleich zu dem regulären Filterbetrieb kleiner ist, z.B. um ein mehrfaches kleiner ist. Im Austragebetrieb kann die Drehgeschwindigkeit der Filtertrommel zum Beispiel kleiner/gleich 20% oder kleiner/gleich 10% oder kleiner/gleich 5% der Drehgeschwindigkeit der Filtertrommel im regulären Filterbetrieb sein. Der Drehantrieb 70 weist hier eine Antriebsvorrichtung 72 (zum Beispiel einen elektrischen Antriebsmotor) und eine Übertragungsvorrichtung 74 auf, mit der ein Antriebsdrehmoment der Antriebsvorrichtung 72 auf die Antriebswelle 110 übertragen wird.

Die Steuervorrichtung S ist z.B. derart eingerichtet, dass von ihr der Drehantrieb 70 im Austragebetrieb derart gesteuert wird (z.B. steuerbar ist), dass die Drehzahl der Filtertrommel 30 derart ist, dass das Verhältnis zwischen der auf das in der Filtertrommel 30 vorliegende ausgefilterte Feststoffmaterial F wirkenden Zentrifugalbeschleunigung und der Erdbeschleunigung (bzw. dass die auf das Feststoffmaterial in der Filtertrommel wirkende G-Kraft) kleiner als eins ist. Dadurch bleibt, anders als im normalen Filterbetrieb, im Austragebetrieb das Feststoffmaterial F nicht via Zentrifugalkraft an der Filtertrommelinnenfläche anhaften. Z.B. ist im Austragebetrieb das Verhältnis von Zentrifugalbeschleunigung, die auf das in der Filtertrommel vorliegende ausgefilterte Feststoffmaterial wirkt, zu Erdbeschleunigung (bzw. die auf das Feststoffmaterial in der Filtertrommel wirkende G-Kraft) kleiner gleich 0,5 (bzw. kleiner gleich 0,5G) oder z.B. kleiner gleich 0,1 (bzw. kleiner gleich 0,1 G) oder z.B. kleiner gleich 0,05 (z.B. kleiner gleich 0,05G).

Die Austragevorrichtungs-Arme 52 der Feststoffmaterial-Austragevorrichtungen 50 der Filterzentrifugen 10 gemäß den verschiedenen Ausführungsformen der Erfindung können um eine im Abstand zum freien Armende 54 angeordnete Schwenkachse L4 schwenkbar sein, welche zumindest im Wesentlichen parallel zur Filtertrommellängsachse L1 und versetzt dazu ist (siehe Figuren 1, 5, 6 und 7). Zur Schwenkbewegung und/oder zur oben erläuterten translatorischen Bewegung des Austragevorrichtungs-Arms 52 kann die Feststoffmaterial-Austragevorrichtung 50 einen an die Steuervorrichtung S angeschlossenen Antrieb 90 aufweisen. Der Antrieb 90 kann eine Antriebsvorrichtung 92 (zum Beispiel einen elektrischen Antriebsmotor) und eine Übertragungsvorrichtung 94 aufweisen, die mit der Antriebsvorrichtung 92 und dem Austragevorrichtungs-Arm 52 verbunden ist und über die eine Antriebsbewegung von der Antriebsvorrichtung 92 auf den Austragevorrichtungs-Arm 52 übertragen wird. Durch die Schwenkbewegung kann die Feststoffmaterial-Einlassöffnung 58 (radial bezüglich der Filtertrommellängsachse) in die Nähe der Filtertrommelinnenfläche 32 bewegt werden, sodass das an der Filtertrommelinnenfläche 32 anhaftende, ausgefilterte Feststoffmaterial F durch die Feststoffmaterial-Einlassöffnung 58 in die Feststoffmaterial-Austrageleitung 56 gelangen kann. Der Austragevorrichtungs-Arm 52 kann zum Beispiel ein Hohlkörper (zum Beispiel ein Rohr oder ein Schlauch) mit einem inneren Hohlraum sein und die Feststoffmaterial-Austrageleitung 56 kann von dem Hohlraum des Hohlkörpers gebildet sein.

Im regulären Filterbetrieb kann der Austragevorrichtungs-Arm 52 zum Beispiel so in der Filtertrommel 30 angeordnet sein, dass die Feststoffmaterial-Einlassöffnung 58 zumindest fünfmal so weit von der Filtertrommelinnenfläche 32 entfernt ist wie im Austragebetrieb, um ein Eintreten bzw. Eindringen der Suspension in die Feststoffmaterial-Austrageleitung 56 durch die Feststoffmaterial-Einlassöffnung 58 zumindest zu behindern. Dazu kann der Austragevorrichtungs-Arm 52 zum Beispiel mittels des Antriebs 90 um die Schwenkachse L4 geschwenkt werden.

Die Filterzentrifugen 10 gemäß den diversen Ausführungsformen können, wie in Figur 7 gezeigt, ferner einen Zentrifugendeckel 118 aufweisen, welcher zum Öffnen schwenkbar mit einem Maschinengestell bzw. Maschinengehäuse 116 verbunden ist. An dem Zentrifugendeckel 118 können zum Beispiel eine Suspension-Zuführvorrichtung 120 zum Zuführen der Suspension zu der (bzw. in die) Filtertrommel 30 sowie die Feststoffmaterial-Austragvorrichtung 50 angebracht sein. Im Geschlossen-Zustand des Zentrifugendeckels 118 verschließt dieser die Öffnung 40 der Filtertrommel 30 dicht, wobei die Suspension-Zuführvorrichtung 120 und die Feststoffmaterial-Austragvorrichtung 50 in die Filtertrommel 10 hineinragen, und umgibt gemeinsam mit dem Maschinengestell 116 die Filtertrommel 30, sodass die Filtertrommel 30 in einem zwischen dem Zentrifugendeckel 118 und dem Maschinengestell 116 abgedichtet ausgebildeten Raum 114 angeordnet ist. Ferner ist in dem Maschinengestell 116 auf Höhe eines tiefsten Punktes des Raumes 114 eine mit dem Raum 114 in Verbindung stehende Flüssigkeit-Austragvorrichtung 128 vorgesehen. Das Maschinengestell 116 weist ferner zum Beispiel zwei Trommellager 136 auf, in denen die Antriebswelle 110 gelagert ist (zum Beispiel zumindest im Wesentlichen horizontal), wobei die Filtertrommel 30 mittels der Antriebswelle 110 an dem Maschinengestell 116 zum Beispiel fliegend gelagert angebracht sein kann.

Die Funktionsweise der in Figur 7 gezeigten Filterzentrifuge 10 ist wie folgt. Mittels der Suspension-Zuführvorrichtung 120 wird der Filtertrommel 30 im Rahmen des regulären Filterbetriebs der Filtertrommel 10 die zu filtrierende Suspension zugeführt. Die Filtertrommel 30 wird mittels der Antriebsvorrichtung 70 in Rotation versetzt, wodurch die Suspension via Fliehkraft zur Filtertrommelinnenfläche 32 gezwungen wird. Die Flüssigkeit der Suspension kann das an der Filtertrommelinnenfläche 32 angebrachte Filtertuch 112 sowie die Filtertrommel 30 durch die Drainagebohrungen bzw. -löcher 42 durchdringen und somit aus der Filtertrommel 30 in den Raum 114 geschleudert werden. Die Flüssigkeit wird schließlich mittels der Flüssigkeit-Austragvorrichtung 128 aus dem Raum 114 abgeführt. Das Feststoffmaterial F der Suspension wird durch das Filtermedium 112 zurückgehalten und dadurch aus der Suspension ausgefiltert.

Schließlich wird bei Erreichen eines ausreichenden Ausschleuderns der Flüssigkeit das an dem Filtertuch 112 als Filterkuchen anliegende, ausgefilterte Feststoffmaterial F im Rahmen des Austragebetriebs der Filterzentrifuge 10 von dem Filtertuch 112 mittels der Feststoffmaterial-Austragvorrichtung 50 unter gesteuertem Drehen der Filtertrommel 30 und unter gesteuertem Bewegen des Austragevorrichtungs-Arms 52 entfernt und mittels der Feststoffmaterial-Austragvorrichtung 50 aus der Filtertrommel 30 ausgetragen. Der reguläre Filterbetrieb unterscheidet sich von dem Austragebetrieb zumindest dadurch, dass die Drehgeschwindigkeit bzw. die Drehzahl der Filtertrommel 30 im Austragebetrieb (zum Beispiel um ein mehrfaches) kleiner ist als im regulären Filterbetrieb und die Position der Feststoffmaterial-Einlassöffnung 58 in der Filtertrommel 30 verschieden ist. Im Austragebetrieb ist die Feststoffmaterial-Einlassöffnung 58 in die Nähe der Filtertrommelinnenfläche bewegt, um das an der Filtertrommelinnenfläche 32 anhaftende Feststoffmaterial F aufnehmen zu können. Im regulären Filterbetrieb ist die Feststoffmaterial-Einlassöffnung 58 zum Beispiel in die Nähe der Filtertrommellängsachse L1 bewegt, um ein Eindringen der zu filtrierenden Suspension in die Feststoffmaterial-Austrageleitung 56 zumindest im Wesentlichen vollständig zu verhindern/unterbinden.

Die vorhergehende Beschreibung von spezifischen beispielgebenden Ausführungsformen der vorliegenden Erfindung wurde präsentiert zum Zwecke der Illustration und Beschreibung. Sie soll nicht erschöpfend sein oder die Erfindung auf die offenbarten präzisen Formen beschränken, und selbstverständlich sind viele Modifikationen und Variationen im Lichte der obigen Lehre möglich. Die beispielgebenden Ausführungsformen wurden ausgewählt und beschrieben, um bestimmte Prinzipien der Erfindung und ihre praktische Anwendung zu erläutern, um hierdurch Fachleuten zu ermöglichen, verschiedene beispielgebende Ausführungsformen der vorliegenden Erfindung sowie verschiedene Alternativen und Modifikationen davon herzustellen und anzuwenden. Es ist beabsichtigt, dass der Umfang der Erfindung durch die hieran angehängten Ansprüche und ihre Äquivalente definiert wird.

## Patentansprüche

1. Filterzentrifuge (10) zum Ausfiltern eines Feststoffmaterials (F) aus einer Suspension, die von dem Feststoffmaterial (F) und einer Flüssigkeit gebildet ist, mit
einer Filtertrommel (30), welche eine Filtertrommelinnenfläche (32) und eine Filtertrommellängsachse (L1) definiert und welche um die Filtertrommellängsachse (L1) drehbar ist, und
einer Feststoffmaterial-Austragevorrichtung (50) zum Austragen des ausgefilterten Feststoffmaterials (F) aus der Filtertrommel (30) im Rahmen eines Austragebetriebs der Filterzentrifuge (10),
wobei die Feststoffmaterial-Austragevorrichtung (50) aufweist
einen Austragevorrichtungs-Arm (52) mit einem freien Armende (54), und
eine Feststoffmaterial-Austrageleitung (56), welche an dem Arm (52) ausgebildet ist und über welche das ausgefilterte Feststoffmaterial (F) aus der Filtertrommel (30) herausführbar ist und welche eine Feststoffmaterial-Einlassöffnung (58) hat, welche benachbart zu dem freien Armende (54) angeordnet ist und über welche das ausgefilterte Feststoffmaterial (F) von der Filtertrommel (30) in die Feststoffmaterial-Austrageleitung (56) gelangen kann,
wobei der Austragevorrichtungs-Arm (52) gesteuert bewegbar eingerichtet ist, sodass im Austragebetrieb die Feststoffmaterial-Einlassöffnung (58) mittels einer Bewegung des Austragevorrichtungs-Arms (52) in die Nähe der Filtertrommelinnenfläche (32) bewegbar ist, um das an der Filtertrommelinnenfläche (32) anhaftende, ausgefilterte Feststoffmaterial (F) aufnehmen zu können, und
wobei die Feststoffmaterial-Austragevorrichtung (50) ferner zumindest eine Kufe (60) aufweist, welche eine Kufen-Längsachse (L2) definiert, die sich quer zur Filtertrommellängsachse (L1) erstreckt, und welche benachbart zu der Feststoffmaterial-Einlassöffnung (58) angeordnet ist, sodass sich die Kufe (60) mit einem sich quer zur Filtertrommellängsachse (L1) erstreckenden Kufen-Auflageabschnitt (62) im Austragebetrieb gegen die Filtertrommelinnenfläche (32)abstützen kann, um dadurch den Austragevorrichtungs-Arm (52) im Austragebetrieb gegen die Filtertrommelinnenfläche (32) abzustützen.

2. Filterzentrifuge (10) gemäß Anspruch 1, wobei die zumindest eine Kufe (60) von einem langgestreckten Drahtbügel gebildet ist.

3. Filterzentrifuge (10) gemäß Anspruch 1 oder 2, wobei die zumindest eine Kufe (60) unter Ausbildung eines Kröpfungsabschnitts (68) gekröpft ist, und wobei der Kufen-Auflageabschnitt (62) von dem Kröpfungsabschnitt (68) gebildet ist.

4. Filterzentrifuge (10) gemäß einem der Ansprüche 1 bis 3, wobei die Feststoffmaterial-Austragevorrichtung (50) ferner eine Klinge (64) aufweist, welche eine Schneide (66) definiert, die sich entlang einer Schneiden-Längsachse (L3) erstreckt, und welche benachbart zur Feststoffmaterial-Einlassöffnung (58) angeordnet ist, wobei die Schneiden-Längsachse (L3) im Austragebetrieb zumindest im Wesentlichen parallel zur Filtertrommellängsachse (L1) angeordnet ist, wobei die Schneide (66) im Austragebetrieb bezüglich der Filtertrommellängsachse (L1) radial nach innen in einem Schneiden-Radialabstand von dem Kufen-Auflageabschnitt (62) angeordnet ist, wobei optional der Schneiden-Radialabstand im Bereich von 1 mm bis 10 mm liegt.

5. Filterzentrifuge (10) gemäß einem der Ansprüche 1 bis 4, ferner mit einer Druckdifferenz-Erzeugungsvorrichtung (130) zum Erzeugen einer Druckdifferenz zwischen der Feststoffmaterial-Einlassöffnung (58) und einem Inneren der Feststoffmaterial-Austrageleitung (56), derart dass der Druck in der Feststoffmaterial-Austrageleitung (56) kleiner ist als in der die Feststoffmaterial-Einlassöffnung (58) umgebenden äußeren Umgebung.

6. Filterzentrifuge (10) gemäß einem der Ansprüche 1 bis 5, wobei sich die Feststoffmaterial-Einlassöffnung (58) und optional die Klinge (64) in Richtung der Filtertrommellängsachse (L1) zumindest im Wesentlichen über die gesamte Länge der Filtertrommelinnenfläche (32) erstreckt.

7. Filterzentrifuge (10) gemäß einem der Ansprüche 1 bis 5, wobei sich die Feststoffmaterial-Einlassöffnung (58) und optional die Klinge (64) in Richtung der Filtertrommellängsachse (L1) über gleich oder weniger als ein Viertel der gesamten Länge der Filtertrommelinnenfläche (32) erstreckt, und wobei der Austragevorrichtungs-Arm (52) ferner gesteuert translatorisch bewegbar eingerichtet ist, sodass im Austragebetrieb die Feststoffmaterial-Einlassöffnung (58) und optional die Klinge (64) mittels einer translatorischen Bewegung des Austragevorrichtungs-Arms (52) in Richtung parallel zur Filtertrommellängsachse (L1) bewegbar ist/sind, um die Feststoffmaterial-Einlassöffnung (58) und optional die Klinge (64) parallel zur Filtertrommellängsachse (L1) zu verschieben.

8. Filterzentrifuge (10) gemäß einem der Ansprüche 1 bis 7, wobei der Austragevorrichtungs-Arm (52) ein Hohlkörper mit einem inneren Hohlraum ist und die Feststoffmaterial-Austrageleitung (56) von dem Hohlraum des Hohlkörpers gebildet ist.

9. Filterzentrifuge (10) gemäß einem der Ansprüche 1 bis 8, wobei der Austragevorrichtungs-Arm (52) um eine im Abstand zum freien Armende (54) angeordnete Schwenkachse (L4) schwenkbar ist, welche zumindest im Wesentlichen parallel zur Filtertrommellängsachse (L1) und versetzt dazu ist.

10. Filterzentrifuge (10) gemäß einem der Ansprüche 1 bis 9, wobei die Filtertrommellängsachse (L1) zumindest im Wesentlichen horizontal angeordnet ist, und wobei im Austragebetrieb die in die Nähe der Filtertrommelinnenfläche (32) bewegte Feststoffmaterial-Einlassöffnung (58) bezüglich der Filtertrommellängsachse (L1) im unteren Drittel der Filtertrommel (30) angeordnet ist.

11. Filterzentrifuge (10) gemäß einem der Ansprüche 1 bis 10, wobei der Kufen-Auflageabschnitt (62) im Austragebetrieb zwischen der Feststoffmaterial-Einlassöffnung (58) und der Filtertrommelinnenfläche (32) angeordnet ist.

12. Filterzentrifuge (10) gemäß einem der Ansprüche 1 bis 11, wobei die zumindest eine Kufe (60) eine erste Kufe (60) ist und die Feststoffmaterial-Austragevorrichtung (50) noch eine zweite Kufe (60a) aufweist, die wie die erste Kufe (60) ausgebildet ist und die in Richtung der Filtertrommellängsachse (L1) im Abstand von der ersten Kufe (60) angeordnet ist, wobei die Feststoffmaterial-Einlassöffnung (58) sich zumindest im Wesentlichen zwischen der ersten Kufe (60) und der zweiten Kufe (60a) befindet.

13. Filterzentrifuge (10) gemäß einem der Ansprüche 1 bis 12, ferner mit einem Drehantrieb (70) zum drehenden Anteiben der Filtertrommel (30) und mit einer Steuervorrichtung (S), die mit dem Drehantrieb (70) verbunden ist und die derart eingerichtet ist, dass von ihr der Drehantrieb im Austragebetrieb derart gesteuert wird, dass die Drehzahl der Filtertrommel (30) derart ist, dass das Verhältnis zwischen der auf das in der Filtertrommel (30) vorliegende ausgefilterte Feststoffmaterial (F) wirkenden Zentrifugalbeschleunigung und der Erdbeschleunigung kleiner eins ist.

## Claims

1. Filter centrifuge (10) for filtering a solid material (F) out of a suspension formed by the solid material (F) and a liquid, including
a filter drum (30) which defines a filter drum inner surface (32) and a filter drum longitudinal axis (L1) and which is rotatable about the filter drum longitudinal axis (L1), and
a solid material discharge device (50) for discharging the filtered-out solid material (F) from the filter drum (30) in the context of a discharge operation of the filter centrifuge (10),
wherein the solid material discharge device (50) comprises
a discharge device arm (52) having a free arm end (54), and
a solid material discharge line (56) which is formed on the arm (52) and through which the filtered-out solid material (F) can be led out of the filter drum (30) and which has a solid material inlet opening (58) which is disposed adjacent to the free arm end (54) and through which the filtered-out solid material (F) can get from the filter drum (30) into the solid material discharge line (56),
wherein the discharge device arm (52) is configured to be movable in a controlled way, such that, in discharge operation, the solid material inlet opening (58) is movable near the filter drum inner surface (32) by means of a movement of the discharge device arm (52), in order to be able to receive the filtered-out solid material (F) adhering to the filter drum inner surface (32), and
wherein the solid material discharge device (50) further comprises at least one skid (60) which defines a skid longitudinal axis (L2) which extends transverse to the filter drum longitudinal axis (L1) and which is arranged adjacent to the solid material inlet opening (58), such that the skid (60) can rest against the filter drum inner surface (32) in discharge operation with a skid support portion (62) extending transverse to the filter drum longitudinal axis (L1), in order to thereby support the discharge device arm (52) against the filter drum inner surface (32) in discharge operation.

2. Filter centrifuge (10) according to claim 1, wherein the at least one skid (60) is formed by an elongated wire bracket.

3. Filter centrifuge (10) according to claim 1 or 2, wherein the at least one skid (60) is cranked, thereby forming a cranking portion (68), and wherein the skid support portion (62) is formed by the cranking portion (68).

4. Filter centrifuge (10) according to any one of claims 1 to 3, wherein the solid material discharge device (50) further comprises a blade (64) which defines an edge (66) which extends along an edge longitudinal axis (L3) and which is disposed adjacent to the solid material inlet opening (58), wherein the edge longitudinal axis (L3) is disposed at least substantially parallel to the filter drum longitudinal axis (L1) in discharge operation, wherein the edge (66), in discharge operation, is disposed relative to the filter drum longitudinal axis (L1) radially inward at an edge radial distance to the skid support portion (62), wherein, optionally, the edge radial distance is in a range of 1 mm to 10 mm.

5. Filter centrifuge (10) according to any one of claims 1 to 4, further including a pressure difference generating device (130) for generating a pressure difference between the solid material inlet opening (58) and an interior of the solid material discharge line (56) in such a way that the pressure in the solid material discharge line (56) is less than in the external environment surrounding the solid material inlet opening (58).

6. Filter centrifuge (10) according to any one of claims 1 to 5, wherein the solid material inlet opening (58) and optionally the blade (64) extend in a direction of the filter drum longitudinal axis (L1) at least substantially over the entire length of the filter drum inner surface (32).

7. Filter centrifuge (10) according to any one of claims 1 to 5, wherein the solid material inlet opening (58) and optionally the blade (64) extend in a direction of the filter drum longitudinal axis (L1) over equal to or less than a quarter of the entire length of the filter drum inner surface (32), and wherein the discharge device arm (52) is, in addition, configured to be movable in a translational and controlled way, so that in discharge operation, the solid material inlet opening (58) and optionally the blade (64) is/are movable by means of a translational movement of the discharge device arm (52) in a direction parallel to the filter drum longitudinal axis (L1), in order to displace the solid material inlet opening (58) and optionally the blade (64) parallel to the filter drum longitudinal axis (L1) .

8. Filter centrifuge (10) according to any one of claims 1 to 7, wherein the discharge device arm (52) is a hollow body having an inner cavity, and the solid material discharge line (56) is formed by the cavity of the hollow body.

9. Filter centrifuge (10) according to any one of claims 1 to 8, wherein the discharge device arm (52) is pivotable about a pivot axis (L4) disposed at a distance from the free arm end (54), which is at least substantially parallel to and offset relative to the filter drum longitudinal axis (L1).

10. Filter centrifuge (10) according to any one of claims 1 to 9, wherein the filter drum longitudinal axis (L1) is at least substantially disposed horizontally, and wherein, in discharge operation, the solid material inlet opening (58) moved near the filter drum inner surface (32) is disposed in the lower third of the filter drum (30) relative to the filter drum longitudinal axis (L1).

11. Filter centrifuge (10) according to any one of claims 1 to 10, wherein the skid support portion (62) is disposed between the solid material inlet opening (58) and the filter drum inner surface (32) in discharge operation.

12. Filter centrifuge (10) according to any one of claims 1 to 11, wherein the at least one skid (60) is a first skid (60) and the solid material discharge device (50) further comprises a second skid (60a) which is configured like the first skid (60) and which is disposed in the direction of the filter drum longitudinal axis (L1) at a distance from the first skid (60), wherein the solid material inlet opening (58) is located at least substantially between the first skid (60) and the second skid (60a).

13. Filter centrifuge (10) according to any one of claims 1 to 12, further including a rotary drive (70) for rotationally driving the filter drum (30) and including a control device (S) connected to the rotary drive (70) and configured in such a way that the rotary drive is controlled by the same in discharge operation in such a way that the rotational speed of the filter drum (30) is such that the ratio between the centrifugal acceleration acting on the filtered-out solid material (F) present in the filter drum (30) and gravity acceleration is less than one.

## Revendications

1. Centrifugeuse filtrante (10) destinée au filtrage d'un matériau solide (F) à partir d'une suspension qui est formée du matériau solide (F) et d'un liquide, avec
un tambour filtrant (30) qui définit une surface intérieure de tambour filtrant (32) et un axe longitudinal de tambour filtrant (L1), et qui peut tourner autour de l'axe longitudinal de tambour filtrant (L1), et
un dispositif d'extraction de matériau solide (50) destiné à l'extraction du matériau solide (F) filtré à partir du tambour filtrant (30) dans le cadre d'un mode extraction de la centrifugeuse filtrante (10),
le dispositif d'extraction de matériau solide (50) présentant
un bras de dispositif d'extraction (52) doté d'une extrémité de bras (54) libre, et
une conduite d'extraction de matériau solide (56) qui est constituée sur le bras (52), et par le biais de laquelle le matériau solide (F) filtré peut être évacué du tambour filtrant (30), et qui est dotée d'un orifice d'entrée de matériau solide (58) qui est disposé au voisinage de l'extrémité de bras (54) libre, et par le biais duquel le matériau solide (F) filtré peut passer du tambour filtrant (30) à la conduite d'extraction de matériau solide (56),
le bras de dispositif d'extraction (52) étant agencé de façon mobile et commandée de telle sorte que, dans le mode extraction, l'orifice d'entrée de matériau solide (58) peut au moyen d'un mouvement du bras de dispositif d'extraction (52) être rapproché de la surface intérieure de tambour filtrant (32) afin de pouvoir recevoir le matériau solide (F) filtré qui adhère à la surface intérieure de tambour filtrant (32), et
le dispositif d'extraction de matériau solide (50) présentant en outre un patin (60) qui définit un axe longitudinal de patin (L2) qui s'étend transversalement à l'axe longitudinal de tambour filtrant (L1) et qui est disposé au voisinage de l'orifice d'entrée de matériau solide (58) de telle sorte que, dans le mode extraction, le patin (60) peut, par un tronçon d'appui de patin (62) s'étendant transversalement à l'axe longitudinal de tambour filtrant (L1), s'appuyer contre la surface intérieure de tambour filtrant (32) pour, dans le mode extraction, supporter ainsi le bras de dispositif d'extraction (52) contre la surface intérieure de tambour filtrant (32).

2. Centrifugeuse filtrante (10) selon la revendication 1, l'au moins un patin (60) étant formé par un étrier en fil métallique allongé.

3. Centrifugeuse filtrante (10) selon la revendication 1 ou 2, l'au moins un patin (60) étant coudé avec formation d'un tronçon coudé (68), et le tronçon d'appui de patin (62) étant formé par le tronçon coudé (68).

4. Centrifugeuse filtrante (10) selon l'une des revendications 1 à 3, le dispositif d'extraction de matériau solide (50) présentant en outre une lame (64), laquelle définit un tranchant (66) qui s'étend le long d'un axe longitudinal de tranchant (L3), et laquelle est disposée au voisinage de l'orifice d'entrée de matériau solide (58), l'axe longitudinal de tranchant (L3) étant, dans le mode extraction, au moins essentiellement parallèle à l'axe longitudinal de tambour filtrant (L1), le tranchant (66) étant, dans le mode extraction, disposé radialement vers l'intérieur par rapport à l'axe longitudinal de tambour filtrant (L1), avec un espacement radial de tranchant au tronçon d'appui de patin (62), l'espacement radial de tranchant se situant optionnellement dans la plage de 1 mm à 10 mm.

5. Centrifugeuse filtrante (10) selon l'une des revendications 1 à 4, dotée en outre d'un dispositif de production de pression différentielle (130) destiné à la production d'une pression différentielle entre l'orifice d'entrée de matériau solide (58) et une partie intérieure de la conduite d'extraction de matériau solide (56) de telle sorte que la pression dans la conduite d'extraction de matériau solide (56) est plus faible que dans l'environnement extérieur entourant l'orifice d'entrée de matériau solide (58).

6. Centrifugeuse filtrante (10) selon l'une des revendications 1 à 5, l'orifice d'entrée de matériau solide (58) et optionnellement la lame (64) s'étendant en direction de l'axe longitudinal de tambour filtrant (L1) au moins essentiellement sur toute la longueur de la surface intérieure de tambour filtrant (32).

7. Centrifugeuse filtrante (10) selon l'une des revendications 1 à 5, l'orifice d'entrée de matériau solide (58) et optionnellement la lame (64) s'étendant en direction de l'axe longitudinal de tambour filtrant (L1) sur un quart ou moins d'un quart de la longueur totale de la surface intérieure de tambour filtrant (32), et le bras de dispositif d'extraction (52) étant en outre agencé de façon mobile en translation et commandée de telle sorte que, dans le mode extraction, l'orifice d'entrée de matériau solide (58) et optionnellement la lame (64) peut/peuvent être déplacé(s) au moyen d'un mouvement de translation du bras de dispositif d'extraction (52) dans une direction parallèlement à l'axe longitudinal de tambour filtrant (L1) pour déplacer l'orifice d'entrée de matériau solide (58) et optionnellement la lame (64) parallèlement à l'axe longitudinal de tambour filtrant (L1).

8. Centrifugeuse filtrante (10) selon l'une des revendications 1 à 7, le bras de dispositif d'extraction (52) étant un corps creux avec une cavité intérieure, et la conduite d'extraction de matériau solide (56) étant formée de la cavité du corps creux.

9. Centrifugeuse filtrante (10) selon l'une des revendications 1 à 8, le bras de dispositif d'extraction (52) pouvant pivoter autour d'un axe de pivotement (L4) qui est disposé à distance de l'extrémité de bras (54) libre et qui est au moins essentiellement parallèle à l'axe longitudinal de tambour filtrant (L1) et décalé par rapport à ce dernier.

10. Centrifugeuse filtrante (10) selon l'une des revendications 1 à 9, l'axe longitudinal de tambour filtrant (L1) étant disposé au moins essentiellement horizontalement, l'orifice d'entrée de matériau solide (58) rapproché de la surface intérieure de tambour filtrant (32) étant, dans le mode extraction, disposé dans le tiers inférieur du tambour filtrant (30) par rapport à l'axe longitudinal de tambour filtrant (L1).

11. Centrifugeuse filtrante (10) selon l'une des revendications 1 à 10, le tronçon d'appui de patin (62) étant, dans le mode extraction, disposé entre l'orifice d'entrée de matériau solide (58) et la surface intérieure de tambour filtrant (32).

12. Centrifugeuse filtrante (10) selon l'une des revendications 1 à 11, l'au moins un patin (60) étant un premier patin (60), et le dispositif d'extraction de matériau solide (50) présentant encore un deuxième patin (60a) qui est constitué comme le premier patin (60) et qui est disposé dans la direction de l'axe longitudinal de tambour filtrant (L1) à distance du premier patin (60), l'orifice d'entrée de matériau solide (58) se trouvant au moins essentiellement entre le premier patin (60) et le deuxième patin (60a).

13. Centrifugeuse filtrante (10) selon l'une des revendications 1 à 12, en outre avec un entraînement rotatif (70) destiné à l'entraînement rotatif du tambour filtrant (30) et avec un dispositif de commande (S) qui est raccordé à l'entraînement rotatif (70) et qui est agencé de telle sorte qu'il commande, dans le mode extraction, l'entraînement rotatif de telle sorte que la vitesse de rotation du tambour filtrant (30) est telle que le rapport entre l'accélération centrifuge agissant sur le matériau solide (F) filtré présent dans le tambour filtrant (30) et l'accélération gravitationnelle est inférieur à un.
